# EUROPEAN PATENT APPLICATION

(11) **EP 1 394 223 A1**
(43) Date of publication of application: **03.03.2004**
(21) Application number: 03254809.1
(22) Date of filing: 31.07.2003
(51) Int. Cl.: C09C 3/10, C09C 1/24

(54) **Method of making crystalline nanoparticles**

(30) Priority: 31.07.2002 US 208945
(71) Applicant: GENERAL ELECTRIC COMPANY, Schenectady, NY 12345 (US)
(72) Inventor: Bonitatebeus, Peter John Jr., Guilderland, New York 12084 (US); Acar, Havva Yagci, Clifton Park, New York 12065 (US)
(74) Representative: Pedder, James Cuthbert

(57) **Abstract**

In a method of forming a plurality of monodisperse nanoparticles (10), each of the nanoparticles (10) comprises a nanocrystalline inorganic core (12) and at least one outer coating (14) comprising an ionizable stabilizing material (15) that substantially covers the core. The method comprises the steps of: combining a nonpolar aprotic organic solvent, an oxidant, and a first surfactant; providing at least one organometallic compound to the combined nonpolar aprotic organic solvent, oxidant, and first surfactant; and heating the combined nonpolar aprotic organic solvent, oxidant, first surfactant, and the at least one organometallic compound under an inert gas atmosphere to a first temperature in a range from about 30°C to about 400°C for a first time interval, thereby reacting the at least one organometallic compound and the oxidant in the presence of the first surfactant and the nonpolar aprotic organic solvent to form a plurality of nanoparticles (10), each of the plurality of nanoparticles (10) comprising a nanocrystalline inorganic core (12) and at least one outer coating (14) comprising the first surfactant. The at least one organometallic compound comprises a metal and at least one ligand.

## Description

The invention relates to nanoparticles having a core of inorganic material. More particularly, the invention relates to a method of making monodisperse nanoparticles. Even more particularly, the invention relates to a method of making monodisperse nanoparticles having a crystalline mixed spinel ferrite core.

Nanotechnology, relating particularly to the formation of a plurality of nanoparticles, has found application in a number of fields, such as diagnostic medicine, molecular imaging, and electronics. Magnetic nanoparticles may be used in magnetic recording, drug delivery, biomolecular separation, and as sensors. Superparamagnetic nanoparticles may, for example, be incorporated into magnetic resonance imaging (MRI) contrast agents, where they serve as signal-generating core nuclei.

The methods that are currently used to synthesize such nanoparticles suffer from several disadvantages. The nanoparticles normally obtained by such methods tend to have a broad size distribution. Consequently, at least one sizing step must be included to obtain a population having the desired size distribution. The nanoparticles obtained by the current methods also have a low level of crystallinity. Moreover, the nanoparticles tend to agglomerate, due to strong interparticle interactions.

Therefore, what is needed is a synthetic route for making a plurality of monodisperse crystalline nanoparticles in a single step. What is also needed is a method of making a plurality of monodisperse crystalline nanoparticles that are resistant to agglomeration.

The present invention meets these and other needs by providing a method of forming a plurality of monodisperse nanoparticles, wherein each of the nanoparticles comprises a substantially crystalline inorganic core and an outer coating substantially covering the inorganic core. In one embodiment, the invention provides a method of forming monodisperse nanoparticles comprising a crystalline mixed spinel ferrite.

Accordingly, one aspect of the invention is to provide a method of forming a plurality of monodisperse nanoparticles. Each of the plurality of nanoparticles comprises a nanocrystalline inorganic core and at least one outer coating substantially covering the nanocrystalline inorganic core. The at least one outer coating comprises an ionizable stabilizing material. The method comprises the steps of: combining a nonpolar aprotic organic solvent, an oxidant, and a first surfactant, wherein the first surfactant has a polarizable head group and is present in a first concentration; providing at least one organometallic compound to the combined nonpolar aprotic organic solvent, oxidant, and first surfactant; and heating the combined nonpolar aprotic organic solvent, oxidant, first surfactant, and the at least one organometallic compound under an inert gas atmosphere to a first temperature in a range from about 30°C to about 400°C for a first time interval, thereby reacting the at least one organometallic compound and the oxidant in the presence of the first surfactant and the nonpolar aprotic organic solvent to form a plurality of nanoparticles, each of the plurality of nanoparticles comprising a nanocrystalline inorganic core and at least one outer coating comprising the first surfactant. The at least one organometallic compound comprises a metal and at least one ligand.

A second aspect of the invention is to provide a method of forming a plurality of monodisperse nanoparticles, each of the plurality of monodisperse nanoparticles comprising a crystalline mixed spinel ferrite. The crystalline mixed spinel ferrite comprises iron in a first oxidation state and a transition metal in a second oxidation state, wherein the second oxidation state is different from the first oxidation state. The method comprises the steps of: combining a nonpolar aprotic organic solvent, an oxidant, and a first surfactant, wherein the first surfactant is present in a first concentration and has a polarizable head group; heating the combined nonpolar aprotic solvent, oxidant, and first surfactant to a first temperature under an inert gas atmosphere; providing an organo-iron compound to the combined nonpolar aprotic solvent, oxidant, and first surfactant at the first temperature; maintaining the organo-iron compound and the combined nonpolar aprotic solvent, oxidant, and first surfactant together at the first temperature for a first time interval under an inert gas atmosphere; providing at least one organo-transition metal compound to the organo-iron compound and the combined nonpolar aprotic solvent, oxidant, and first surfactant together at the first temperature after expiration of the first time interval; and heating the combined nonpolar aprotic solvent, oxidant, and first surfactant, the organo-iron compound, and the at least one organo-transition metal compound under an inert gas atmosphere to a second temperature for a second time interval; thereby reacting the organo-iron compound, the organo-transition metal compound and the oxidant in the presence of the first surfactant and the nonpolar aprotic organic solvent to form the plurality of monodisperse nanoparticles, wherein each of the plurality of monodisperse nanoparticles comprises a crystalline mixed spinel ferrite.

A third aspect of the invention is to provide a method of forming a plurality of nanoparticles. Each of the plurality of nanoparticles comprises a crystalline mixed spinel ferrite core, the crystalline mixed spinel ferrite comprising iron in a first oxidation state and a transition metal in a second oxidation state, wherein the second oxidation state is different from the first oxidation state, and at least one outer coating substantially covering the inorganic core. The method comprises the steps of: combining a nonpolar aprotic organic solvent, an oxidant, and a first surfactant, wherein the first surfactant is present in a first concentration and has a polarizable head group; heating the combined nonpolar aprotic solvent, oxidant, and first surfactant to a first temperature under an inert gas atmosphere; providing an organo-iron compound to the combined nonpolar aprotic solvent, oxidant, and first surfactant at the first temperature; maintaining the organo-iron compound and the combined nonpolar aprotic solvent, oxidant, and first surfactant together at the first temperature for a first time interval under an inert gas atmosphere; providing at least one organo-transition metal compound to the organo-iron compound and the combined nonpolar aprotic solvent, oxidant, and first surfactant together at the first temperature after expiration of the first time interval; heating the combine nonpolar aprotic solvent, oxidant, and first surfactant, the organo-iron compound, and the at least one organo-transition metal compound under an inert gas atmosphere to a second temperature for a second time interval; thereby reacting the organo-iron compound, the organo-transition metal compound and the oxidant in the presence of the first surfactant and the nonpolar aprotic organic solvent to form the plurality of monodisperse nanoparticles, wherein each of the plurality of monodisperse nanoparticles comprises a crystalline mixed spinel ferrite; and precipitating the plurality of monodisperse nanoparticles from the solvent.

The invention will now be described in greater detail, by way of example, with reference to the drawings, in which:-
FIGURE 1 is a schematic representation of a cross-sectional view of a nanoparticle formed by the method of the present invention;
FIGURE 2 is a flow diagram showing a method of forming a plurality of nanoparticles;
FIGURE 3 is a flow diagram showing a method of forming a plurality of nanoparticles having a crystalline mixed spinel ferrite core;
FIGURE 4a is a transmission electron microscopic image of cobalt iron oxide nanoparticles prepared by the method of the present invention;
FIGURE 4b is an x-ray diffraction pattern of cobalt iron oxide nanoparticles prepared by the method of the present invention;
FIGURE 5a is a transmission electron microscopic image of manganese iron oxide nanoparticles prepared by the method of the present invention;
FIGURE 5b is a selected area electron diffraction pattern of manganese iron oxide nanoparticles prepared by the method of the present invention;
FIGURE 6 is a transmission electron microscopic image of spinel-structured mixed iron oxide nanocrystals prepared by the method of the present invention; and
FIGURE 7 is a high resolution transmission electron microscopic image of spinel-structured mixed iron oxide nanocrystals having an outer coating.

In the following description, like reference characters designate like or corresponding parts throughout the several views shown in the figures. It is also understood that terms such as "top", "bottom", "outward", "inward", and the like are words of convenience and are not to be construed as limiting terms.

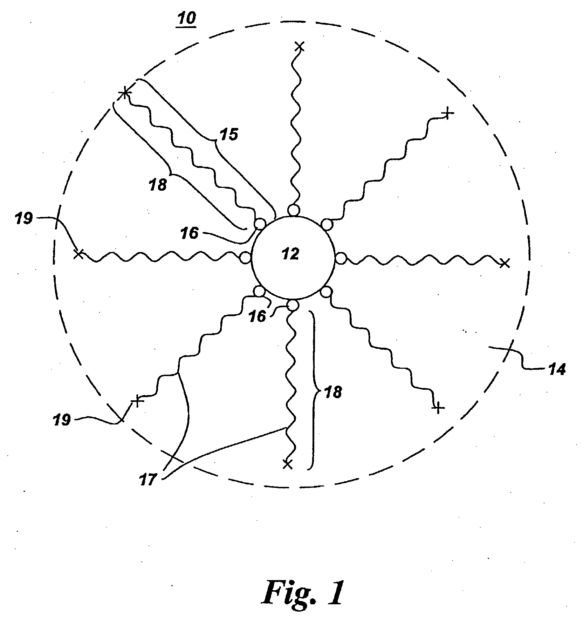

Referring to the drawings in general and to Figure 1 in particular, it will be understood that the illustrations are for the purpose of describing a preferred embodiment of the invention and are not intended to limit the invention thereto. A schematic representation of a cross-sectional view of a nanoparticle formed by the method of the present invention is shown in Figure 1.

Referring to Figure 1, nanoparticle 10 comprises an inorganic core 12 and outer coating 14. Inorganic core 12 comprises substantially crystalline inorganic material. In this context, "substantially crystalline" is understood to mean that inorganic core 12 comprises at least 50 volume percent and, preferably, at least 75 volume percent, crystalline material. Most preferably, inorganic core 12 is a single crystal. In one embodiment, inorganic core 12 is spherical in shape, having a diameter in a range from about 1 nm to about 1000 nm. Nanoparticle 10 is described in U. S. Patent Application , entitled "Nanoparticle Having an Inorganic Core" filed on , 2002 by Peter John Bonitatebus, Jr. and Havva Yagci Acar, the contents of which are incorporated herein by reference in their entirety.

Inorganic core 12 may comprise a variety of inorganic materials, including, but not limited to, transition metals in elemental form, metal oxides, and superparamagnetic materials that are known in the art. For example, an inorganic core 12 comprising superparamagnetic material may include one of elemental iron, a spinel ferrite (Fe₃O₄), or at least one mixed spinel ferrite having the general formula MFe₂O₄, where M is a metal having an oxidation state other than exhibited by the predominant form that of iron, which is 3+. Non-limiting examples of M include iron (where a portion of the iron present iron is Fe²⁺; iron having a 2+ oxidation state), copper, titanium, manganese, cadmium, cobalt, nickel, chromium, gadolinium, zinc, yttrium, molybdenum, and vanadium.

Outer coating 14 is disposed on an outer surface of inorganic core 12 such that outer coating 14 substantially covers and encloses inorganic core 12. Outer coating 14 comprises an ionizable stabilizing material 15 having at least one functionalized group or a plurality of such ionizable stabilizing materials. The ionizable stabilizing material, in one embodiment, may comprise a siloxane. In another embodiment, the ionizable stabilizing material 15 comprises at least one ionizable head portion 16 that couples to the surface of inorganic core 12 and at least one tail portion 18, which includes the at least one functionalized group. The at least one ionizable head portion comprises at least one of an alcohol, a thiol (including thiolates), an amine, an organic carboxylate, an organic sulfonate, an organic phosphonate, and an organic phosphinate. Outer coating 14 serves to prevent contact of one inorganic core 12 with another thus prevents agglomeration of multiple nanoparticles 10. The constituents of outer coating 14 may eventually undergo reaction to provide a more permanent "shell" for inorganic core 12, or replaced by other materials that are tailored for a particular application, such as, but not limited to, diagnostic applications.

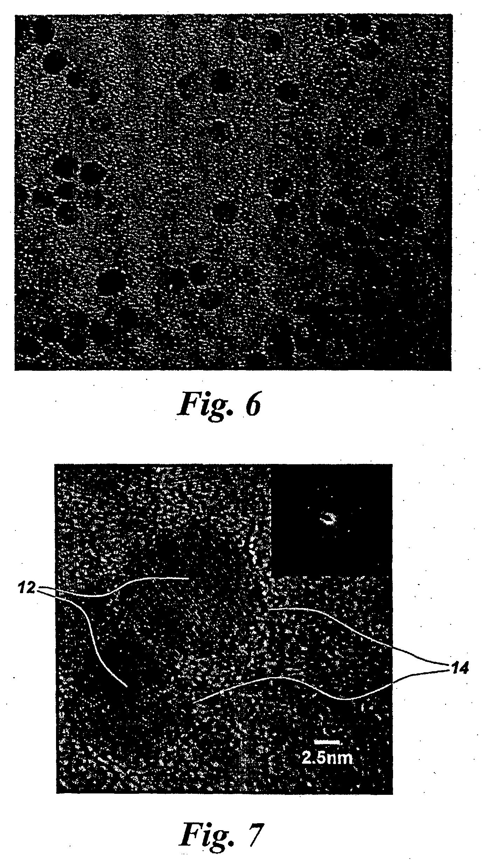

An example of nanoparticle 10 is shown in Figure 7. Inorganic core 12 comprises the crystalline mixed iron oxide (γ-Fe₂O₃)_{1-y}(Fe₃O₄)_{y}. Outer coating 14, comprising 10-undecenate, is bound to inorganic core 12.

The present invention provides a non-aqueous synthetic route for the formation of monodisperse crystalline nanoparticles. Organometallic precursor materials, such as, but not limited to, transition metal carbonyl compounds, are thermally decomposed in a solvent and in the presence of a surfactant and an oxidant. The organometallic precursors are provided in an appropriate stoichiometric ratio to a nonpolar aprotic solvent containing the surfactant and the oxidant.

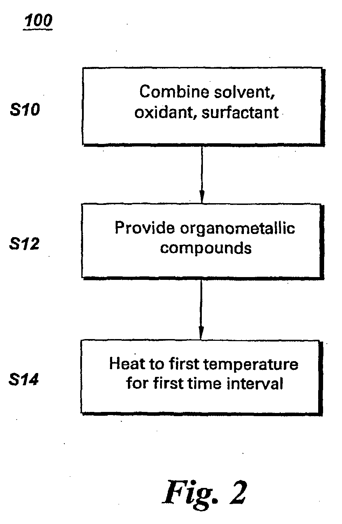

One aspect of the present invention is to provide a method 100 of forming a plurality of crystalline nanoparticles, wherein each nanoparticle 10 comprises an inorganic core 12 and at least one outer coating 14, which, as disclosed above, is disposed on an outer surface of the inorganic core 12, substantially covering and enclosing inorganic core 12. A flow diagram for method 100 is shown in Figure 2.

Referring to Figure 2, step S10 comprises combining a nonpolar aprotic organic solvent, an oxidant, and a first surfactant. In one embodiment, the nonpolar aprotic solvent is thermally stable at the temperatures at which the plurality of nanoparticles are formed and, in one embodiment, the nonpolar aprotic solvent has a boiling point in the range from about 275°C to about 340°C. Suitable nonpolar aprotic solvents include, but are not limited to, dioctyl ether, hexadecane, tetraethylene glycol dimethyl ether (also known as "tetraglyme"), and trioctylamine. The nonpolar aprotic solvent, in one particular embodiment, may include at least one chain comprising at least 6 saturated carbon atoms that are bonded to each other. The oxidant comprises at least one of an organo-tertiary amine oxide, a peroxide, an alkylhydroperoxide, a peroxyacid, molecular oxygen, nitrous oxide, and combinations thereof. In one embodiment, the oxidant comprises an organo-tertiary amine oxide having at least one methyl group. One non-limiting example of such an oxidant is trimethyl amine oxide.

The first surfactant comprises at least one of an ionizable head group, a polymerizable functionalized group, an initiating functionalized group, and a cross-linking functionalized group. An amount of the first surfactant is provided to the nonpolar aprotic organic solvent to produce a first concentration of the first surfactant in the nonpolar aprotic solvent. The ionizable head group comprises at least one of an alcohol, a thiol (including thiolates), an amine, an organic carboxylate, an organic sulfonate, an organic phosphonate, and an organic phosphinate. The polymerizable functionalized group may comprise at least one of an alkene, an alkyne, a vinyl (including acrylics and styrenics), an epoxide, an azeridine, a cyclic ether, a cyclic ester, and a cyclic amide. The initiating functionalized group may comprise at least one of a thermal or photoinitiator, such as, but not limited to, an azo compound, a hydroxide, a peroxide, an alkyl halide, an aryl halide, a halo ketone, a halo ester, a halo amide, a nitroxide, a thiocarbonyl, a thiol, an organo-cobalt compound, a ketone, and an amine. The cross-linking functionalized group may be one of a thiol, an aldehyde, a ketone, a hydroxide, an isocyanide, an alkyl halide, a carboxylate, a carboxylic acid, a phenol, an amine, and combinations thereof.

In step S12, at least one organometallic compound is provided to the combined nonpolar aprotic organic solvent, oxidant, and first surfactant. The at least one organometallic compound comprises at least one metal and at least one ligand. The metal may comprise a transition metal, such as, but not limited to, iron, nickel, copper, titanium, cadmium, cobalt, chromium, manganese, vanadium, yttrium, zinc, and molybdenum, or other metals, such as gadolinium. The at least one ligand may comprise at least one of carbonyl group, a cyclo octadienyl group, an organophosphine group, a nitrosyl group, a cyclo pentadienyl group, a pentamethyl cyclo pentadienyl group, a π-acid ligand, a nitroxy group, and combinations thereof. Non-limiting examples of the at least one organometallic compound include iron carbonyl (Fe(CO)₅), cobalt carbonyl (Co(CO)₈), and manganese carbonyl (Mn₂(CO)₁₀). In one embodiment, an amount of the at least one organometallic compound is provided to the aprotic solvent such that a ratio of the concentration of the at least one organometallic compound to the concentration of the oxidant has a value in a range from about 1 to about 10.

In one embodiment, step S12 may include a step in which a first organometallic compound is provided to the combined nonpolar aprotic organic solvent, oxidant, and first surfactant. The combined first organometallic compound, nonpolar aprotic organic solvent, oxidant, and first surfactant are then preheated under an inert gas atmosphere to a temperature for a time interval. The preheating drives a reaction that removes the ligands from the metal cation in the first organometallic compound. Preheating removes any gaseous reaction by-products as well. In one embodiment, the combined first organometallic compound, nonpolar aprotic organic solvent, oxidant, and first surfactant are preheated to a temperature in a range from about 90°C to about 140°C for a time interval ranging from about 15 minutes to about 90 minutes.

In step S14, the combined nonpolar aprotic solvent, oxidant, first surfactant, and the at least one organometallic compound are heated to under an inert gas atmosphere to a first temperature and maintained at the first temperature for a first time interval. At this point, the at least one organometallic compound reacts with the oxidant in the presence of the first surfactant and the nonpolar aprotic solvent to form a plurality of nanoparticles, wherein each nanoparticle 10 comprises a nanocrystalline inorganic core 12 and at least one outer coating 14 comprising the first surfactant, which is disposed on an outer surface of the inorganic core 12 and substantially covers and encloses the nanocrystalline inorganic core 12.

The first temperature to which the combined in S14 nonpolar aprotic solvent, oxidant, first surfactant, and the at least one organometallic compound are heated is dependent upon the relative thermal stability of the at least one organometallic compound that is provided to the aprotic solvent. The first temperature is in a range from about 30°C to about 400°C. In one embodiment, the first temperature is in a range from about 275°C to about 400°C and, preferably, in a range from about 275°C to about 310°C. The length of the first time interval may be from about 30 minutes to about 2 hours, depending on the particular organometallic compounds and oxidants that are provided to the aprotic solvent.

In one embodiment, method 100 may further comprise the step of precipitating the plurality of nanoparticles from the nonpolar aprotic solvent. Precipitation of the plurality of nanoparticles may be accomplished by adding at least one of an alcohol or a ketone to the nonpolar aprotic solvent. Alcohols such as, but not limited to, methanol and ethanol may be used. Alcohols having at least three carbon atoms, such as isopropanol, are preferred, as their use tends to produce the smallest degree of agglomeration. Ketones such as, but not limited to, acetone may be used in conjunction with - or separate from - an alcohol in the precipitation step.

In another embodiment, method 100 may also further include a step in which a second surfactant replaces - or is exchanged for - the first surfactant in outer coating 14. Substitution of the second surfactant for the first surfactant may be either partial complete. Following the formation of the plurality of nanoparticles, the second surfactant is added to the nonpolar aprotic solvent such that the second surfactant is present in a second concentration, the second concentration being greater than a first concentration of the first surfactant in the nonpolar aprotic solvent. The second surfactant comprises at least one of a polymerizable functionalized group, an initiating functionalized group, and a cross-linking functionalized group and is different from the first surfactant. Suitable polymerizable functionalized groups, initiating functionalized groups, and cross-linking functionalized groups for the second surfactant are the same as those groups that are suitable for the first surfactant, and have been previously described herein.

In some instances, the differences in the first concentration and second concentration are sufficient to drive the substitution of the second surfactant for the first surfactant in outer coating 14 of each of the plurality of nanoparticles. In one embodiment, the substitution of the second surfactant for the first surfactant may further include heating the nonpolar aprotic solvent containing the plurality of nanoparticles to a second temperature for a second time interval. Preferably, the second temperature is in a range from about 25°C to about 80°C and the second time interval is about one hour.

It is understood that method 100 may include either full or partial substitution of the second surfactant for the first surfactant in the outer coating 14 of each of the plurality of nanoparticles, followed by precipitation of the plurality of nanoparticles.

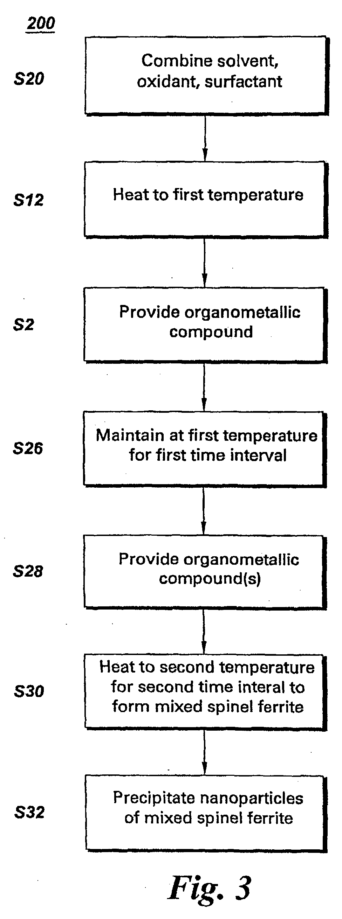

In one particular embodiment, shown in Figure 3, the present invention provides a method 200 of forming a plurality of monodisperse nanoparticles 10, wherein each of the plurality of monodisperse nanoparticles comprises a crystalline mixed spinel ferrite core 12 and an outer coating 14 disposed on an outer surface of the crystalline mixed spinel ferrite core. The crystalline mixed spinel ferrite core comprises iron in a first oxidation state and a transition metal in a second oxidation state, wherein the second oxidation state is different from the first oxidation state.

In step S20 of method 200, an oxidant and a first surfactant are combined a nonpolar aprotic organic solvent. In one embodiment, the nonpolar aprotic solvent is thermally stable at the temperatures at which the plurality of nanoparticles are formed and, in one embodiment, the nonpolar aprotic solvent has a boiling point in the range from about 275°C to about 340°C. Suitable nonpolar aprotic solvents include, but are not limited to, dioctyl ether, hexadecane, tetraethylene glycol dimethyl ether (also known as "tetraglyme"), and trioctylamine. The nonpolar aprotic solvent, in one particular embodiment, may include at least one chain comprising at least 6 saturated carbon atoms that are bonded to each other. The oxidant comprises at least one of an organo-tertiary amine oxide, a peroxide, an alkylhydroperoxide, a peroxyacid, molecular oxygen, nitrous oxide, and combinations thereof. In one embodiment, the oxidant comprises an organo-tertiary amine oxide having at least one methyl group. One non-limiting example of such an oxidant is trimethyl amine oxide. The first surfactant comprises at least one of an ionizable headgroup, a polymerizable functionalized group, an initiating functionalized group, and a cross-linking functionalized group. An amount of the first surfactant is provided to the nonpolar aprotic organic solvent to produce a first concentration of the first surfactant in the nonpolar aprotic solvent. Suitable polymerizable functionalized groups, initiating functionalized groups, and cross-linking functionalized groups for the first surfactant are the same as those that have been previously described herein.

Step S22 comprises heating the combined nonpolar aprotic solvent, oxidant, and first surfactant under an inert gas atmosphere to a first temperature. In one embodiment, the first temperature is in a range from about 90°C to about 140°C. An organo-iron compound is then provided to the combined nonpolar aprotic solvent, oxidant, and first surfactant at the first temperature (step S24). The organo-iron compound, together with the combined nonpolar aprotic solvent, oxidant, and first surfactant, is maintained at the first temperature for a first time interval under an inert gas atmosphere (step S26). In step S26, the ligands are removed form the organo-iron compound in the presence of the oxidant; the first time interval must therefore be of sufficient duration to accomplish the removal. In one embodiment, the first time interval may be from about 15 minutes to about 90 minutes.

The organo-iron compound comprises iron and at least one ligand. In one embodiment, the at least one ligand comprises at least one of a carbonyl group, a cyclo octadienyl group, an organophosphine group, a nitrosyl group, a cyclo pentadienyl group, a pentamethyl cyclo pentadienyl group, a π-acid ligand, a nitroxy group, and combinations thereof. One non-limiting example of the organo-iron compound is iron carbonyl (Fe(CO)₅).

Following the expiration of the first time interval, at least one organo-transition metal compound is added to and combined with the organo-iron compound and the combined nonpolar aprotic solvent, oxidant, and first surfactant together at the first temperature (step S26). The at least one organo-transition metal compound comprises a transition metal and at least one ligand. In one embodiment, the transition metal is one of iron, nickel, copper, titanium, cadmium, cobalt, chromium, manganese, vanadium, yttrium, zinc, and molybdenum. Organic compounds of other metals, such as gadolinium, may be used instead of an organo-transition metal compound. The at least one ligand comprises at least one of a carbonyl group, a cyclo octadienyl group, an organophosphine group, a nitrosyl group, a cyclo pentadienyl group, a pentamethyl cyclo pentadienyl group, a π-acid ligand, a nitroxy group, and combinations thereof. Non-limiting examples of the at least one organo-transition metal compound include cobalt carbonyl (Co(CO)₈) and manganese carbonyl (Mn₂(CO)₁₀).

In step S30, the at least one organo-transition metal compound, organo-iron compound, nonpolar aprotic solvent, oxidant, and first surfactant, now combined together, are heated to a second temperature and maintained at the second temperature for a second time interval. The organo-iron compound reacts with the at least one organo-transition metal compound at the second temperature to form a plurality of monodisperse nanoparticles, wherein each of the plurality of monodisperse nanoparticles comprises a crystalline mixed spinel ferrite core 12 and an outer coating 14 comprising the first surfactant, disposed on an outer surface of the crystalline mixed spinel ferrite core. Iron carbonyl (Fe(CO)₅), for example, may react with cobalt carbonyl (Co(CO)₈) in step S28 to form nanoparticles comprising the crystalline cobalt iron spinel ferrite CoFe₂O₄. Alternatively, iron carbonyl may react with manganese carbonyl (Mn₂(CO)₁₀) in step S28 to form nanoparticles comprising the crystalline manganese iron spinel ferrite MnFe₂O₄. Where the at least one organo-transition metal compound comprises iron carbonyl, nanoparticles comprising the crystalline mixed iron oxide (γ-Fe₂O₃)_{1-y}(Fe₃O₄)_{y} are formed.

In one embodiment, the second temperature is in a range from about 275°C to about 400°C. In a second embodiment, the second temperature is in a range from about 275°C to about 310°C. In one embodiment, the second time interval may range from about 30 minutes to about two hours.

The plurality of nanoparticles are precipitated from the nonpolar aprotic solvent in step S32 by adding at least one of an alcohol or a ketone to the nonpolar aprotic solvent. Alcohols such as, but not limited to, methanol and ethanol may be used. Alcohols having at least three carbon atoms, such as isopropanol, are preferred, as their use tends to produce the smallest degree of agglomeration. Ketones such as, but not limited to, acetone may be used in conjunction with - or separate from - an alcohol in the precipitation step.

Method 200 may also further include a step in which a second surfactant replaces - or is exchanged for - the first surfactant in outer coating 14, as previously described herein. Substitution of the second surfactant for the first surfactant may be either partial complete. Alternatively, method 200 may further comprise the step of precipitating the plurality of nanoparticles from the nonpolar aprotic solvent, as previously described herein. Finally, method 200 may further comprise substitution of the second surfactant for the first surfactant in the outer coating 14 of each of the plurality of nanoparticles, followed by precipitation of the plurality of nanoparticles.

The plurality of nanoparticles produced by methods 100 and 200 are monodisperse; i.e., the nanoparticles are substantially identical in size and shape. For example, mixed iron oxide (γ-Fe₂O₃)_{1-y}(Fe₃O₄)_{y} nanoparticles produced using the methods described herein exhibit about a 10% variation in diameter (5 nm ± 0.5nm). Similarly, manganese iron spinel ferrite MnFe₂O₄ nanoparticles produced using the methods described herein exhibit about a 10% variation in diameter (10.6 nm ± 1.16 nm).

The following examples serve to illustrate the features and advantages of the present invention.

### Example 1

A mixture of trimethylamine-N-oxide (7.59 millimoles (mmol)), lauric acid (4.54 mmol), and 10 ml deoxygenated hexadecane, each individually dehydrated, were added under an inert atmosphere in a glove box to a 50 ml 2-neck Schlenk flask. The flask was attached to a Schlenk vacuum, and a column-reflux condenser assembly was attached under a blanket of N₂. The mixture was homogenized with vigorous stirring and heating to about 100°C.

About 1.01 millimoles (mmol) iron carbonyl (Fe(CO)₅) were then added to the slowly stirred reaction solution, which was at a temperature in a range from about 100°C to about 105°C, resulting in instantaneous and aggressive reaction. Iron carbonyl addition was complete and the intense reaction subsided in less than a minute. The reaction mixture was then heated to a temperature in a range from about 120°C to about 130 °C under N₂ and maintained at temperature for 1 hour with vigorous stirring.

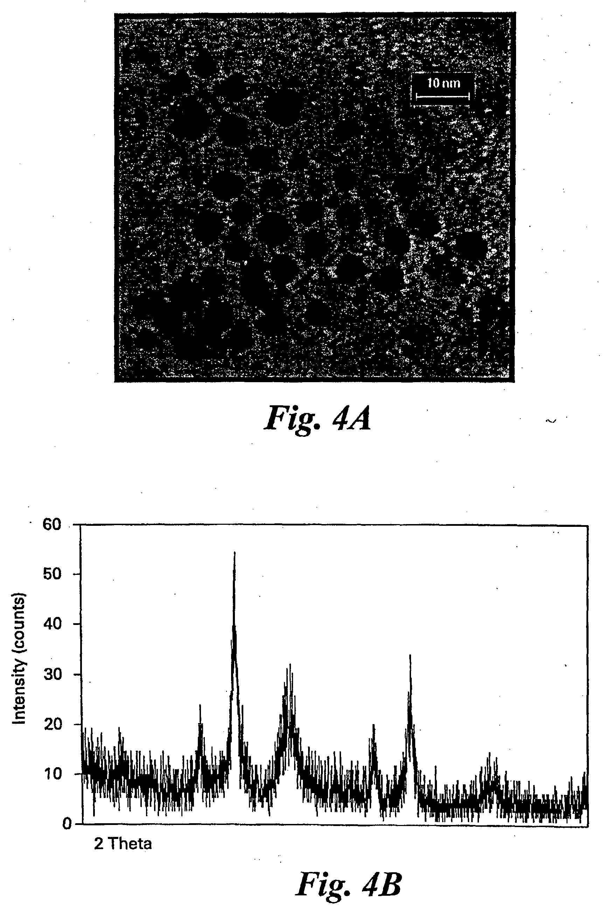

About 0.25 mmol of cobalt carbonyl (Co₂(CO)₈) was then added to the reaction mixture, turning the solution royal purple in color. The temperature of the reaction mixture was rapidly increased to about 300°C to allow the reaction mixture to reflux. After 1 hour of refluxing and stirring at about 300°C, the color of the reaction mixture appeared to turn black. The reaction mixture was then cooled to room temperature, and an excess of amount of ethanol was added to the reaction mixture, yielding a black precipitate. The precipitate was separated by centrifuging and collected. The collected black powder was then washed with an ethanol/acetone mixture and dried. Crystal structure, composition, and particle size analysis of the powder were obtained by transmission electron microscopy (TEM) imaging, energy dispersive x-ray (EDX) elemental analysis, x-ray absorption spectroscopy (XAS), and selected area electron diffraction / x-ray diffraction (SAED-XRD) pattern crystal symmetry pattern indexing. The powder obtained was found to comprise monodisperse spinel-structured cobalt iron oxide (CoFe₂O₄) nanocrystals, each having a particle size of about 5 nm. A TEM image of the CoFe₂O₄ nanocrystals that were obtained is shown in Figure 4a, and the SAED-XRD diffraction pattern, showing the cubic spinel crystal structure of the CoFe₂O₄ nanocrystals, is pictured in Figure 4b.

### Example 2

A mixture of trimethylamine-N-oxide (7.60 mmol), lauric acid (4.56 mmol), and 7 ml of deoxygenated dioctyl ether, each individually dehydrated, were added under an inert atmosphere in a glove box to a 50 ml 2-neck Schlenk flask. The flask was attached to a Schlenk vacuum line, and a column-reflux condenser assembly was attached under a blanket of N₂. The mixture was homogenized with vigorous stirring and heating to about 100°C.

About 1.52 mmol of iron carbonyl (Fe(CO)₅) were then added to the slowly stirred reaction solution, which was at a temperature in a range from about 100°C to about 105°C, resulting in instantaneous and aggressive reaction. Iron carbonyl addition was complete and the intense reaction subsided in less than a minute. The reaction mixture was then heated to a temperature in a range from about 120°C to about 130 °C under N₂ and maintained at temperature for 1 hour with vigorous stirring.

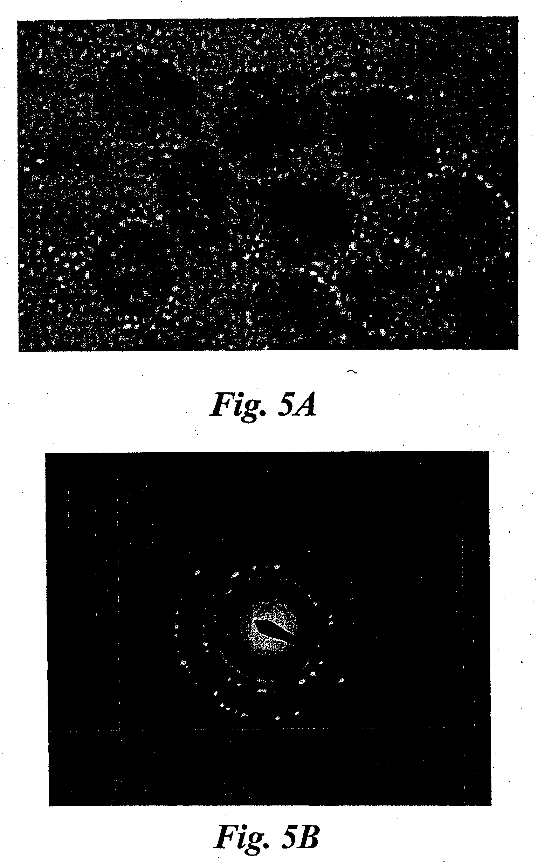

About 0.38 mmol of Manganese carbonyl Mn₂(CO)₁₀ was then added to the reaction mixture. The temperature of the reaction mixture was rapidly increased to about 300°C to allow the reaction mixture to reflux. After 1 hour of refluxing and stirring at about 300°C, the color of the reaction mixture turned black. The reaction mixture was then cooled to room temperature, and an excess of amount of ethanol was added to the reaction mixture, yielding a black precipitate. The precipitate was separated by centrifuging and collected. The collected black powder was then washed with an ethanol/acetone mixture and dried. Crystal structure, composition, and particle size analysis of the powder were obtained by transmission electron microscopy (TEM) imaging, energy dispersive x-ray (EDX) elemental analysis, x-ray absorption spectroscopy (XAS), and selected area electron diffraction /x-ray diffraction (SAED-XRD) crystal symmetry pattern indexing. The powder obtained was found to comprise monodisperse spinel-structured manganese iron oxide (MnFe₂O₄ nanocrystals, each having a particle size of about 10.6 nm ± 1.68 nm. Figures 5a and 5b include a TEM image of the MnFe₂O₄ nanocrystals and an SAED-XRD diffraction pattern showing the cubic spinel crystal structure of the MnFe₂O₄ nanocrystals, respectively.

### Example 3

A mixture of trimethylamine-*N*-oxide (7.60 mmol), lauric acid (4.56 mmol), and 7 ml of deoxygenated dioctyl ether, each individually dehydrated and deoxygenated, were added under an inert atmosphere to a 50 ml 2-neck Schlenk flask. The flask was attached to a Schlenk vacuum-line, and a column-reflux condenser assembly was attached under a blanket of N₂. The mixture was homogenized with vigorous stirring and heating to about 100°C.

About 1.52 mmol of iron carbonyl (Fe(CO)₅) were then added to the slowly stirred reaction solution, which was at a temperature in a range from about 100°C to about 105°C, resulting in instantaneous and aggressive reaction. Iron carbonyl addition was completed in less than a minute and the intense reaction subsided. The reaction mixture was then heated to a temperature in a range from about 120°C to about 130 °C under N₂ and maintained at temperature for 1 hour with vigorous stirring.

About 0.76 mmol of iron carbonyl (Fe(CO)₅) was then added to the reaction mixture. The temperature of the reaction mixture was rapidly increased to about 300°C to allow the reaction mixture to reflux. After 1 hour of refluxing and stirring at about 300°C, the color of the reaction mixture turned black. The reaction mixture was then cooled to room temperature, and an equal volume amount of isopropyl alcohol was added to the reaction mixture, yielding a black precipitate. The precipitate was separated by centrifuging and collected by magnetic decantation. Particles were readily dispersed in toluene and octane, forming homogeneous solutions. Crystal structure, composition, and particle size analysis of the powder were obtained by transmission electron microscopy (TEM) imaging, energy dispersive x-ray (EDX) elemental analysis, x-ray absorption spectroscopy (XAS), and selected area electron diffraction / x-ray diffraction (SAED-XRD) crystal symmetry pattern indexing. The powder obtained was found to comprise monodisperse spinel-structured mixed iron oxide (γ-Fe₂O₃)_{1-y}(Fe₃O₄)_{y} nanocrystals, each having a particle size of about 10 nm ± 1 nm. A TEM image of the (γ-Fe₂O₃)_{1-y} (Fe₃O₄)_{y} nanocrystals that were obtained are shown in Figure 6.

For the sake of good order, various aspects of the invention are set out in the following clauses: -
1. A method of forming a plurality of nanoparticles (10), each of the plurality of nanoparticles (10) comprising a nanocrystalline inorganic core (12) and at least one outer coating (14) substantially covering the nanocrystalline inorganic core (12), the at least one outer coating (14) comprising at least one ionizable stabilizing material, the method comprising the steps of:
   a) combining a nonpolar aprotic organic solvent, an oxidant, and a first surfactant, wherein the first surfactant is present in a first concentration and has a polarizable head group;
   b) providing at least one organometallic compound to the combined nonpolar aprotic organic solvent, oxidant, and first surfactant, wherein the at least one organometallic compound comprises a metal and at least one ligand; and
   c) heating the combined nonpolar aprotic organic solvent, oxidant, first surfactant, and the at least one organometallic compound under an inert gas atmosphere to a first temperature in a range from about 30°C to about 400°C for a first time interval, thereby reacting the at least one organometallic compound and the oxidant in the presence of the first surfactant and the nonpolar aprotic organic solvent to form a plurality of nanoparticles (10), each of the plurality of nanoparticles (10) comprising a nanocrystalline inorganic core (12) and at least one outer coating (14) comprising the first surfactant.
2. The method of Clause 1, further comprising the step of precipitating the plurality of nanoparticles (10) from the nonpolar aprotic solvent.
3. The method of Clause 2, wherein the step of precipitating the plurality of nanoparticles (10) comprises adding one of an alcohol and a ketone to the nonpolar aprotic solvent.
4. The method of Clause 1, further comprising the step of exchanging a second surfactant for the first surfactant in the outer coating (14).
5. The method of Clause 4, wherein the step of substituting a second surfactant for the first surfactant in the outer coating (14) comprises the step of providing the second surfactant to the nonpolar aprotic solvent in a second concentration, wherein the second concentration is greater than the first concentration, wherein the second surfactant is substituted for the first surfactant in the outer coating (14).
6. The method of Clause 5, further including the step of heating the nonpolar aprotic solvent to a second temperature for a second time period, wherein the second surfactant is substituted for the first surfactant in the outer coating (14).
7. The method of Clause 6, wherein the step of heating the nonpolar aprotic solvent to a second temperature for a second time period comprises heating the nonpolar aprotic solvent to a temperature in a range from about 25°C to about 80°C for about one hour.
8. The method of Clause 5, further including the step of precipitating the plurality of nanoparticles (10) from the solvent.
9. The method of Clause 1, wherein the nonpolar aprotic organic solvent has a boiling point in a range from about 275°C to about 340°C.
10. The method of Clause 9, wherein the nonpolar aprotic organic solvent comprises at least one of dioctyl ether, hexadecane, tetraethylene glycol dimethyl ether, and trioctylamine.
11. The method of Clause 1, wherein the oxidant comprises at least one of an organo-tertiary amine oxide, a peroxide, an alkylhydroperoxide, a peroxyacid, molecular oxygen, nitrous oxide, and combinations thereof.
12. The method of Clause 11, wherein the oxidant comprises an organo-tertiary amine oxide, wherein the organo-tertiary amine oxide includes at least one methyl group.
13. The method of Clause 12, wherein the organo-tertiary amine oxide is trimethyl amine oxide.
14. The method of Clause 1, wherein the first surfactant comprises at least one of an ionizable head group, a polymerizable functionalized group, an initiating functionalized group, and a cross-linking functionalized group in a first concentration to the nonpolar aprotic organic solvent.
15. The method of Clause 14, wherein the ionizable head group comprises at least one of an alcohol, a thiol, an amine, an organic carboxylate, an organic sulfonate, an organic phosphonate, and an organic phosphinate.
16. The method of Clause 14, wherein the polymerizable functionalized group comprises at least one of an alkene, an alkyne, a vinyl, an epoxide, an azeridine, a cyclic ether, a cyclic ester, and a cyclic amide.
17. The method of Clause 14, wherein the initiating functionalized group comprises one of a thermal initiator and a photoinitiator.
18. The method of Clause 17, wherein the initiating functionalized group comprises at least one of an azo compound, a hydroxide, a peroxide, an alkyl halide, an aryl halide, a halo ketone, a halo ester, a halo amide, a nitroxide, a thiocarbonyl, a thiol, an organo-cobalt compound, a ketone, and an amine.
19. The method of Clause 14, wherein the cross-linking functionalized group comprises at least one of a thiol, an aldehyde, a ketone, a hydroxide, an isocyanide, an alkyl halide, a carboxylate, a carboxylic acid, a phenol, an amine, and combinations thereof.
20. The method of Clause 1, wherein the step of heating the combined nonpolar aprotic organic solvent, oxidant, first surfactant, and the at least one organometallic compound under an inert gas atmosphere to a temperature for a first time interval in a range from 30°C to about 400°C comprises heating the combined nonpolar aprotic organic solvent, oxidant, first surfactant, and the at least one organometallic compound under an inert gas atmosphere to a temperature for a first time interval in a range from 275°C to about 310°C.
21. The method of Clause 1, wherein the at least one organometallic compound comprises a metal and at least one of a carbonyl group, a cyclo octadienyl group, an organophosphine group, a nitrosyl group, a cyclo pentadienyl group, a pentamethyl cyclo pentadienyl group, a π-acid ligand, a nitroxy group, and combinations thereof.
22. The method of Clause 21, wherein the metal comprises a transition metal.
23. The method of Clause 21, wherein the metal is one of iron, copper, titanium, manganese, cadmium, cobalt, nickel, chromium, gadolinium, zinc, yttrium, molybdenum, and vanadium.
24. The method of Clause 1, wherein the step of providing at least one organometallic compound to the combined nonpolar aprotic organic solvent, oxidant, and first surfactant comprises providing at least one organometallic compound to the combined nonpolar aprotic organic solvent, oxidant, and first surfactant such that a ratio of a concentration of the metal to a concentration of the oxidant has a value in the range from about 1 to about 10.
25. A method of forming a plurality of monodisperse nanoparticles 10, each of the plurality of monodisperse nanoparticles (10) comprising a crystalline mixed spinel ferrite, the crystalline mixed spinel ferrite comprising iron in a first oxidation state and a transition metal in a second oxidation state, wherein the second oxidation state is different from the first oxidation state, the method comprising the steps of:
   a) combining a nonpolar aprotic organic solvent, an oxidant, and a first surfactant, wherein the first surfactant is present in a first concentration and has a polarizable head group;
   b) heating the combined nonpolar aprotic solvent, oxidant, and first surfactant to a first temperature under an inert gas atmosphere;
   c) providing an organo-iron compound to the combined nonpolar aprotic solvent, oxidant, and first surfactant at the first temperature;
   d) maintaining the organo-iron compound and the combined nonpolar aprotic solvent, oxidant, and first surfactant together at the first temperature for a first time interval under an inert gas atmosphere;
   e) providing at least one organo-transition metal compound to the organo-iron compound and the combined nonpolar aprotic solvent, oxidant, and first surfactant together at the first temperature after expiration of the first time interval; and
   f) heating the combine nonpolar aprotic solvent, oxidant, and first surfactant, the organo-iron compound, and the at least one organo-transition metal compound under an inert gas atmosphere to a second temperature for a second time interval; thereby reacting the organo-iron compound, the organo-transition metal compound and the oxidant in the presence of the first surfactant and the nonpolar aprotic organic solvent to form the plurality of monodisperse nanoparticles 10, wherein each of the plurality of monodisperse nanoparticles 10 comprises a crystalline mixed spinel ferrite.
26. The method according to Clause 25, wherein the organo-iron compound comprises iron and at least one ligand, wherein the at least one ligand comprises at least one of a carbonyl group, a cyclo octadienyl group, an organophosphine group, a nitrosyl group, a cyclo pentadienyl group, a pentamethyl cyclo pentadienyl group, a π-acid ligand, a nitroxy group, and combinations thereof.
27. The method according to Clause 25, wherein the at least one organo-transition metal compound comprises a transition metal and at least one ligand, wherein the transition metal is one of iron, copper, titanium, manganese, cadmium, cobalt, nickel, chromium, gadolinium, zinc, yttrium, molybdenum, and vanadium, and wherein the at least one ligand comprises at least one of a carbonyl group, a cyclo octadienyl group, an organophosphine group, a nitrosyl group, a cyclo pentadienyl group, a pentamethyl cyclo pentadienyl group, a π-acid ligand, a nitroxy group, and combinations thereof.
28. The method according to Clause 25, wherein the nonpolar aprotic organic solvent has a boiling point in a range from about 275°C to about 340°C.
29. The method according to Clause 25, wherein the nonpolar aprotic organic solvent comprises at least one of dioctyl ether, hexadecane, tetraethylene glycol dimethyl ether, and trioctylamine.
30. The method according to Clause 25, wherein the oxidant comprises at least one of an organo-tertiary amine oxide, a peroxide, an alkylhydroperoxide, a peroxyacid, molecular oxygen, nitrous oxide, and combinations thereof.
31. The method according to Clause 30, wherein the oxidant comprises an organo-tertiary amine oxide, wherein the organo-tertiary amine oxide includes at least one methyl group.
32. The method according to Clause 31, wherein the organo-tertiary amine oxide is trimethyl amine oxide.
33. The method according to Clause 25, wherein the first surfactant comprises at least one of an ionizable head group, a polymerizable functionalized group, an initiating functionalized group, and a cross-linking functionalized group in a first concentration to the nonpolar aprotic organic solvent.
34. The method according to Clause 33, wherein the ionizable head group comprises at least one of an alcohol, a thiol, an amine, an organic carboxylate, an organic sulfonate, an organic phosphonate, and an organic phosphinate.
35. The method according to Clause 33, wherein the polymerizable functionalized group comprises at least one of an alkene, an alkyne, a vinyl, an epoxide, an azeridine, a cyclic ether, a cyclic ester, and a cyclic amide.
36. The method of Clause 33, wherein the initiating functionalized group comprises one of a thermal initiator and a photoinitiator.
37. The method according to Clause 36, wherein the initiating functionalized group comprises at least one of an azo compound, a hydroxide, a peroxide, an alkyl halide, an aryl halide, a halo ketone, a halo ester, a halo amide, a nitroxide, a thiocarbonyl, a thiol, an organo-cobalt compound, a ketone, and an amine.
38. The method according to Clause 33, wherein the cross-linking functionalized group comprises at least one of a thiol, an aldehyde, a ketone, a hydroxide, an isocyanide, an alkyl halide, a carboxylate, a carboxylic acid, a phenol, an amine, and combinations thereof.
39. The method according to Clause 25, wherein the first temperature is in a range from about 90°C to about 140°C.
40. The method according to Clause 25, wherein the first time interval is in a range from about 15 minutes to about 90 minutes.
41. The method according to Clause 25, wherein the second temperature is in a range from about 275°C to about 400°C.
42. The method according to Clause 25, wherein the second temperature is in a range from about 275°C to about 310°C.
43. The method according to Clause 25, wherein the second time interval is in a range from about 30 minutes to about 2 hours.
44. A method of forming a plurality of nanoparticles 10, each of the plurality of nanoparticles 10 comprising a crystalline mixed spinel ferrite core, the crystalline mixed spinel ferrite comprising iron in a first oxidation state and a transition metal in a second oxidation state, wherein the second oxidation state is different from the first oxidation state, and at least one outer coating 14 substantially covering the inorganic core 12, the method comprising the steps of:
   a) combining a nonpolar aprotic organic solvent, an oxidant, and a first surfactant, wherein the first surfactant is present in a first concentration and has a polarizable head group;
   b) heating the combined nonpolar aprotic solvent, oxidant, and first surfactant to a first temperature under an inert gas atmosphere;
   c) providing an organo-iron compound to the combined nonpolar aprotic solvent, oxidant, and first surfactant at the first temperature;
   d) maintaining the organo-iron compound and the combined nonpolar aprotic solvent, oxidant, and first surfactant together at the first temperature for a first time interval under an inert gas atmosphere;
   e) providing at least one organo-transition metal compound to the organo-iron compound and the combined nonpolar aprotic solvent, oxidant, and first surfactant together at the first temperature after expiration of the first time interval;
   f) heating the combine nonpolar aprotic solvent, oxidant, and first surfactant, the organo-iron compound, and the at least one organo-transition metal compound under an inert gas atmosphere to a second temperature for a second time interval; thereby reacting the organo-iron compound, the organo-transition metal compound and the oxidant in the presence of the first surfactant and the nonpolar aprotic organic solvent to form the plurality of monodisperse nanoparticles 10, wherein each of the plurality of monodisperse nanoparticles 10 comprises a crystalline mixed spinel ferrite; and
   g) precipitating the plurality of monodisperse nanoparticles 10 from the solvent.
45. The method according to Clause 44, wherein the organo-iron compound comprises iron and at least one of a carbonyl group, a cyclo octadienyl group, an organophosphine group, a nitrosyl group, a cyclo pentadienyl group, a pentamethyl cyclo pentadienyl group, a π-acid ligand, a nitroxy group, and combinations thereof.
46. The method according to Clause 44, wherein the at least one organo-transition metal compound comprises a transition metal and at least one ligand, wherein the transition metal is one of iron, copper, titanium, manganese, cadmium, cobalt, nickel, chromium, gadolinium, zinc, yttrium, molybdenum, and vanadium, and wherein the at least one ligand comprises at least one of a carbonyl group, a cyclo octadienyl group, an organophosphine group, a nitrosyl group, a cyclo pentadienyl group, a pentamethyl cyclo pentadienyl group, a π-acid ligand, a nitroxy group, and combinations thereof.
47. The method of Clause 44, wherein the nonpolar aprotic organic solvent has a boiling point in a range from about 275°C to about 340°C.
48. The method according to Clause 47, wherein the nonpolar aprotic organic solvent comprises at least one of dioctyl ether, hexadecane, tetraethylene glycol dimethyl ether, and trioctylamine.
49. The method of Clause 44, wherein the oxidant comprises at least one of an organo-tertiary amine oxide, a peroxide, an alkylhydroperoxide, a peroxyacid, molecular oxygen, nitrous oxide, and combinations thereof.
50. The method of Clause 44, wherein the oxidant comprises an organo-tertiary amine oxide, wherein the organo-tertiary amine oxide includes at least one methyl group.
51. The method of Clause 50, wherein the organo-tertiary amine oxide includes at least one methyl group.
52. The method according to Clause 51, wherein the organo-tertiary amine oxide is trimethyl amine oxide.
53. The method of Clause 44, wherein the first surfactant comprises at least one of an ionizable head group, a polymerizable functionalized group, an initiating functionalized group, and a cross-linking functionalized group in a first concentration to the nonpolar aprotic organic solvent.
54. The method according to Clause 53, wherein the ionizable head group comprises at least one of an alcohol, a thiol, an amine, an organic carboxylate, an organic sulfonate, an organic phosphonate, and an organic phosphinate.
55. The method according to Clause 53, wherein the polymerizable functionalized group comprises at least one of an alkene, an alkyne, a vinyl, an epoxide, an azeridine, a cyclic ether, a cyclic ester, and a cyclic amide.
56. The method of Clause 53, wherein the initiating functionalized group comprises one of a thermal initiator and a photoinitiator.
57. The method according to Clause 56, wherein the initiating functionalized group comprises at least one of an azo compound, a hydroxide, a peroxide, an alkyl halide, an aryl halide, a halo ketone, a halo ester, a halo amide, a nitroxide, a thiocarbonyl, a thiol, an organo-cobalt compound, a ketone, and an amine.
58. The method according to Clause 53, wherein the cross-linking functionalized group comprises at least one of a thiol, an aldehyde, a ketone, a hydroxide, an isocyanide, an alkyl halide, a carboxylate, a carboxylic acid, a phenol, an amine, and combinations thereof.
59. The method according to Clause 44, wherein the first temperature is in a range from about 90°C to about 140°C.
60. The method according to Clause 44, wherein the first time interval is in a range from about 15 minutes to about 90 minutes.
61. The method according to Clause 44, wherein the second temperature is in a range from about 275°C to about 400°C.
62. The method according to Clause 44, wherein the second temperature is in a range from about 275°C to about 310°C.
63. The method according to Clause 44, wherein the second time interval is in a range from about 30 minutes to about 2 hours.
64. The method according to Clause 44, wherein the step of precipitating the plurality of nanoparticles (10) comprises adding at least one of an alcohol and a ketone to the solvent.
65. The method according to Clause 64, wherein the alcohol includes at least three carbon atoms.
66. The method according to Clause 65, wherein the alcohol is isopropanol.
67. The method according to Clause 44, further comprising the step of exchanging a second surfactant for the first surfactant in the outer coating 14.
68. The method according to Clause 67, wherein the step of substituting a second surfactant for the first surfactant in the outer coating (14) comprises the step of providing the second surfactant to the nonpolar aprotic solvent in a second concentration, wherein the second concentration is greater than the first concentration, wherein the second surfactant is substituted for the first surfactant in the outer coating (14).
69. The method according to Clause 68, further including the step of heating the nonpolar aprotic solvent to a second temperature for a second time period, wherein the second surfactant is substituted for the first surfactant in the outer coating (14).
70. The method according to Clause 69, wherein the step of heating the nonpolar aprotic solvent to a second temperature for a second time period comprises heating the nonpolar aprotic solvent to a temperature in a range from about 25°C to about 80°C for about one hour.

## Claims

1. A method of forming a plurality of nanoparticles (10), each of the plurality of nanoparticles (10) comprising a nanocrystalline inorganic core (12) and at least one outer coating (14) substantially covering the nanocrystalline inorganic core (12), the at least one outer coating (14) comprising at least one ionizable stabilizing material, the method comprising the steps of:
a) combining a nonpolar aprotic organic solvent, an oxidant, and a first surfactant, wherein the first surfactant is present in a first concentration and has a polarizable head group;
b) providing at least one organometallic compound to the combined nonpolar aprotic organic solvent, oxidant, and first surfactant, wherein the at least one organometallic compound comprises a metal and at least one ligand; and
c) heating the combined nonpolar aprotic organic solvent, oxidant, first surfactant, and the at least one organometallic compound under an inert gas atmosphere to a first temperature in a range from about 30°C to about 400°C for a first time interval, thereby reacting the at least one organometallic compound and the oxidant in the presence of the first surfactant and the nonpolar aprotic organic solvent to form a plurality of nanoparticles (10), each of the plurality of nanoparticles (10) comprising a nanocrystalline inorganic core (12) and at least one outer coating (14) comprising the first surfactant.

2. The method of Claim 1, further comprising the step of precipitating the plurality of nanoparticles (10) from the nonpolar aprotic solvent.

3. The method of Claim 2, wherein the step of precipitating the plurality of nanoparticles (10) comprises adding one of an alcohol and a ketone to the nonpolar aprotic solvent.

4. The method of Claim 1, 2 or 3, further comprising the step of exchanging a second surfactant for the first surfactant in the outer coating (14).

5. A method of forming a plurality of monodisperse nanoparticles 10, each of the plurality of monodisperse nanoparticles (10) comprising a crystalline mixed spinel ferrite, the crystalline mixed spinel ferrite comprising iron in a first oxidation state and a transition metal in a second oxidation state, wherein the second oxidation state is different from the first oxidation state, the method comprising the steps of:
a) combining a nonpolar aprotic organic solvent, an oxidant, and a first surfactant, wherein the first surfactant is present in a first concentration and has a polarizable head group;
b) heating the combined nonpolar aprotic solvent, oxidant, and first surfactant to a first temperature under an inert gas atmosphere;
c) providing an organo-iron compound to the combined nonpolar aprotic solvent, oxidant, and first surfactant at the first temperature;
d) maintaining the organo-iron compound and the combined nonpolar aprotic solvent, oxidant, and first surfactant together at the first temperature for a first time interval under an inert gas atmosphere;
e) providing at least one organo-transition metal compound to the organo-iron compound and the combined nonpolar aprotic solvent, oxidant, and first surfactant together at the first temperature after expiration of the first time interval; and
f) heating the combine nonpolar aprotic solvent, oxidant, and first surfactant, the organo-iron compound, and the at least one organo-transition metal compound under an inert gas atmosphere to a second temperature for a second time interval; thereby reacting the organo-iron compound, the organo-transition metal compound and the oxidant in the presence of the first surfactant and the nonpolar aprotic organic solvent to form the plurality of monodisperse nanoparticles 10, wherein each of the plurality of monodisperse nanoparticles 10 comprises a crystalline mixed spinel ferrite.

6. The method according to Claim 5, wherein the organo-iron compound comprises iron and at least one ligand, wherein the at least one ligand comprises at least one of a carbonyl group, a cyclo octadienyl group, an organophosphine group, a nitrosyl group, a cyclo pentadienyl group, a pentamethyl cyclo pentadienyl group, a π-acid ligand, a nitroxy group, and combinations thereof.

7. The method according to Claim 5 or 6, wherein the at least one organo-transition metal compound comprises a transition metal and at least one ligand, wherein the transition metal is one of iron, copper, titanium, manganese, cadmium, cobalt, nickel, chromium, gadolinium, zinc, yttrium, molybdenum, and vanadium, and wherein the at least one ligand comprises at least one of a carbonyl group, a cyclo octadienyl group, an organophosphine group, a nitrosyl group, a cyclo pentadienyl group, a pentamethyl cyclo pentadienyl group, a π-acid ligand, a nitroxy group, and combinations thereof.

8. A method of forming a plurality of nanoparticles (10), each of the plurality of nanoparticles (10) comprising a crystalline mixed spinel ferrite core, the crystalline mixed spinel ferrite comprising iron in a first oxidation state and a transition metal in a second oxidation state, wherein the second oxidation state is different from the first oxidation state, and at least one outer coating (14) substantially covering the inorganic core (12), the method comprising the steps of:
a) combining a nonpolar aprotic organic solvent, an oxidant, and a first surfactant, wherein the first surfactant is present in a first concentration and has a polarizable head group;
b) heating the combined nonpolar aprotic solvent, oxidant, and first surfactant to a first temperature under an inert gas atmosphere;
c) providing an organo-iron compound to the combined nonpolar aprotic solvent, oxidant, and first surfactant at the first temperature;
d) maintaining the organo-iron compound and the combined nonpolar aprotic solvent, oxidant, and first surfactant together at the first temperature for a first time interval under an inert gas atmosphere;
e) providing at least one organo-transition metal compound to the organo-iron compound and the combined nonpolar aprotic solvent, oxidant, and first surfactant together at the first temperature after expiration of the first time interval;
f) heating the combine nonpolar aprotic solvent, oxidant, and first surfactant, the organo-iron compound, and the at least one organo-transition metal compound under an inert gas atmosphere to a second temperature for a second time interval; thereby reacting the organo-iron compound, the organo-transition metal compound and the oxidant in the presence of the first surfactant and the nonpolar aprotic organic solvent to form the plurality of monodisperse nanoparticles (10), wherein each of the plurality of monodisperse nanoparticles (10) comprises a crystalline mixed spinel ferrite; and
g) precipitating the plurality of monodisperse nanoparticles (10) from the solvent.

9. The method according to Claim 8, wherein the organo-iron compound comprises iron and at least one of a carbonyl group, a cyclo octadienyl group, an organophosphine group, a nitrosyl group, a cyclo pentadienyl group, a pentamethyl cyclo pentadienyl group, a π-acid ligand, a nitroxy group, and combinations thereof.

10. The method according to Claim 8 or 9, wherein the at least one organo-transition metal compound comprises a transition metal and at least one ligand, wherein the transition metal is one of iron, copper, titanium, manganese, cadmium, cobalt, nickel, chromium, gadolinium, zinc, yttrium, molybdenum, and vanadium, and wherein the at least one ligand comprises at least one of a carbonyl group, a cyclo octadienyl group, an organophosphine group, a nitrosyl group, a cyclo pentadienyl group, a pentamethyl cyclo pentadienyl group, a π-acid ligand, a nitroxy group, and combinations thereof.
